# EUROPEAN PATENT APPLICATION

(11) **EP 3 950 383 A1**
(43) Date of publication of application: **09.02.2022**
(21) Application number: 19923195.2
(22) Date of filing: 19.12.2019
(51) Int. Cl.: B60C 7/10, B60C 7/00, B29D 30/02

(54) **TIRE FOR ELECTRIC SCOOTER**

(30) Priority: 04.04.2019 CN 201910270775
(71) Applicant: Ningbo Wonder Power Tech Co., Ltd., Ningbo, Zhejiang 315164 (CN)
(72) Inventor: LI, Tao, Ningbo, Zhejiang 315164 (CN)
(74) Representative: Becker, Eberhard
(86) International application number: PCT/CN2019/126596
(87) International publication number: WO 2020/199661

(57) **Abstract**

A tire for an electric scooter, comprising a hub (1) and an outer cover (2) sleeved on the hub (1) and fixedly connected thereto. An annular cavity (21) is provided along the circumferential direction of the outer cover (2). A shock absorption and noise reduction ring (3) having the deformation characteristics is fixedly disposed in the annular cavity (21). The tire has good shock absorption and noise reduction effects and good comfort while having high safety.

## Description

### BACKGROUND

### Technical Field

The invention belongs to the technical field of vehicle tires, and particularly relates to a tire for electric skateboards.

### Description of Related Art

Skateboards have been widely applied because of their advantages of energy conservation, environmental friendliness, and portability. Traditional skateboards typically comprise a footboard, and a tire set composed of multiple tires and mounted on the footboard. Users step on the footboard with one foot and kick the ground backwards to drive the skateboard to slide forwards. The traditional skateboards are driven manually, thus being low in speed, time-consuming, and strenuous. In view of this, electric skateboards are developed by improving traditional skateboards. Existing electric skateboards mainly comprise a footboard, a tire set composed of multiple tires, and a driving mechanism for driving the tire set to rotate, wherein the tire set is mounted on the footboard, and the driving mechanism is generally a motor. Users control the tire set to rotate by means of the driving mechanism to drive the skateboards to slide. Compared with traditional skateboards, the sliding speed of the electric skateboards is greatly increased and reaches 20 km/h. In addition, the electric skateboards are driven by the motor to save time and labor and have gradually replaced the traditional skateboards at present, thus being applied more and more widely.

At present, there are mainly two types of tires for electric skateboards, which are pneumatic tires and solid tires. Specifically, the pneumatic tires are light, and a cavity and air in the pneumatic tires fulfill a buffer effect in the traveling process, so that the shock absorption effect is good. However, the pneumatic tires have to be inflated frequently to work normally, which is inconvenient. The pneumatic tires may burst when the traveling speed is high, such that the safety is low. The pneumatic tires are mainly applied to traditional skateboards with a low speed, and are not suitable for electric skateboards. The solid tires are mainly used for electric skateboards at present and are higher in safety and more convenient to use than pneumatic tires. However, the solid tires are heavy and poor in shock absorption effect in the traveling process, and may generate loud noises, thus being unsatisfying in conform.

### SUMMARY

The technical issue to be settled by the invention is to provide a tire for electric skateboards, which is high in safety, good in shock absorption and noise reduction effect, and provides good comfort.

The technical solution adopted by the invention to settle the above technical issue is as follows. A tire for electric skateboards includes a hub and a tire casing. The hub is sleeved with the tire casing, the tire casing is fixedly connected to the hub, an annular cavity is formed in the tire casing in a circumferential direction of the tire casing, and a deformable shock absorption and noise reduction ring is fixedly disposed in the annular cavity.

The shock absorption and noise reduction ring includes an annular ring and multiple protruding ribs disposed on an outer wall of the annular ring and distributed at equal intervals in a circumferential direction of the annular ring, and a lengthwise extension direction of each protruding rib is parallel to an axial direction of the annular ring. In this structure, the protruding ribs are distributed at equal intervals in the circumferential direction of the annular ring. When the tire is stressed, the protruding ribs are compressed vertically and extend towards two sides, the annular ring is also compressed to fulfill a buffer effect, and thus the shock absorption and noise reduction function is realized.

The annular ring has a thickness of 2.3-10.8 mm, and each protruding rib has a height of 16.0-17.5 mm. In this structure, the protruding ribs with a large height are used as main buffer components, and the annular ring is thin, so that when the tire suffers from an excessive pressure, the pressure can be rapidly transmitted to the hub by means of the annular ring, and thus the tire is prevented from excessive deformation.

A left end surface of each protruding rib is a slope inclining downwards from right to left, and a right end surface of each protruding rib is a slope extending downwards from left to right. In this structure, the two slopes can guarantee the wall thickness of the tire casing to provide more reliable support.

The annular ring and the multiple protruding ribs are formed integrally. In this structure, the annular ring and the multiple protruding ribs are formed integrally, such that the structural strength is high, and is easy to process.

The density of the shock absorption and noise reduction ring is 0.9-1g/cm³. In this structure, the density of the shock absorption and noise reduction ring is smaller than that of polyurethane plastic, so that the weight of the whole tires is reduced, power and labor are saved in the traveling process, and the intensity of vibrations generated in the traveling process is reduced.

The hub includes an inner ring and an outer ring coaxially disposed outside the inner ring and fixedly connected to the inner ring, an annular groove is formed in an inner wall of the shock absorption and noise reduction ring, and the outer ring is fixedly embedded in the annular groove. In this structure, the outer ring is embedded in the annular groove to be fixed to prevent the shock absorption and noise reduction ring from moving, so that the relative positions of the shock absorption and noise reduction ring and the hub are kept unchanged.

A thickness of the outer ring is greater than a depth of the annular groove, the outer ring is formed with multiple through holes axially penetrating through the outer ring, and the multiple through holes are distributed at intervals in a circumferential direction of the outer ring. Each through hole is communicated with the annular cavity and is filled with polyurethane plastic, and the polyurethane plastic enters the annular cavity from the through holes to connect the hub, the tire casing and the shock absorption and noise reduction ring together. In this structure, the hub, the tire casing and the shock absorption and noise reduction ring are connected by means of the polyurethane plastic, so that the connection strength is high, the structural strength of the tire is further improved, and the stability is good.

A distance from the inner wall of the shock absorption and noise reduction ring to the outer wall of the inner ring is 5.8-7.8 mm. In this structure, the tire casing stretches into a gap between the inner wall of the shock absorption and noise reduction ring and the outer wall of the inner ring and firmly wraps the shock absorption and noise reduction ring, so that the structural strength of the tire is improved.

Compared with the prior art, the invention has the following beneficial effects. The deformable shock absorption and noise reduction ring disposed in the annular cavity fulfills a buffer effect. In this way, when the tire is stressed, the tire is compressed to deform reduce a pressure applied to the tire, and a shock absorption and noise reduction function is realized, and thus the tire provides good comfort and is high in safety.

### BRIEF DESCRIPTION OF THE DRAWINGS

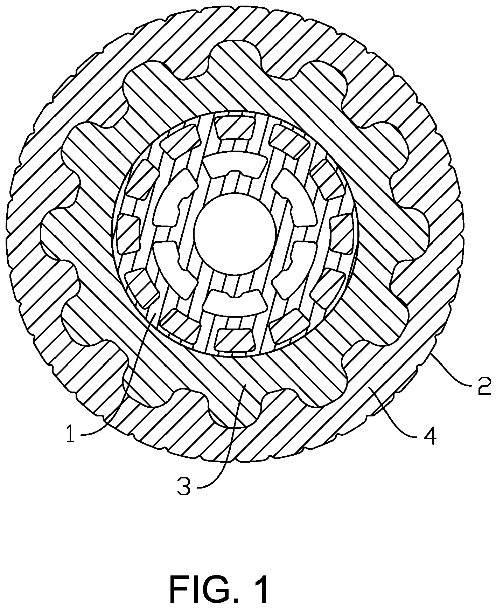

FIG. 1 is a sectional view of the invention;

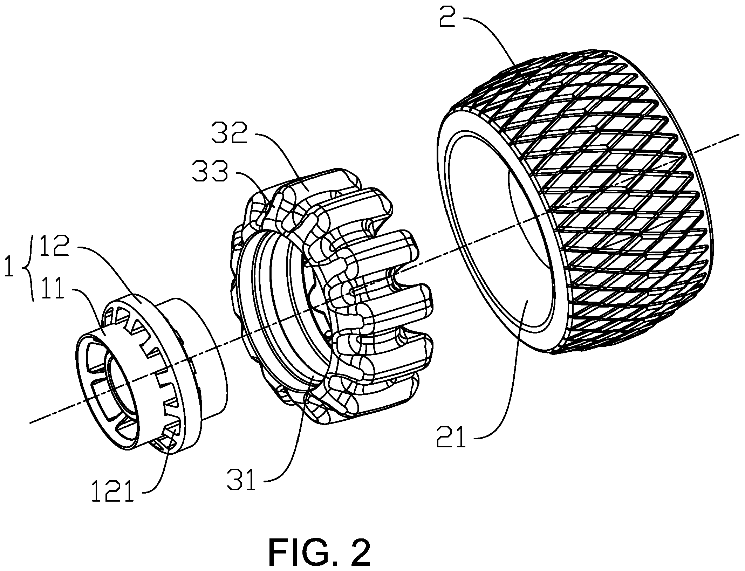

FIG. 2 is an exploded view of the invention;

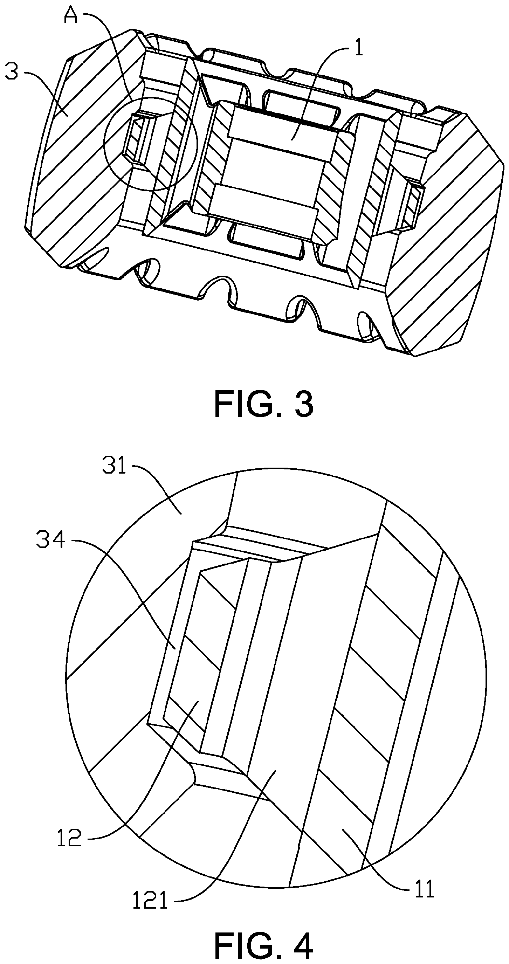

FIG. 3 is a sectional view of a hub and a shock absorption and noise reduction ring of the invention;
FIG. 4 is an enlarged view of part A in FIG. 3;

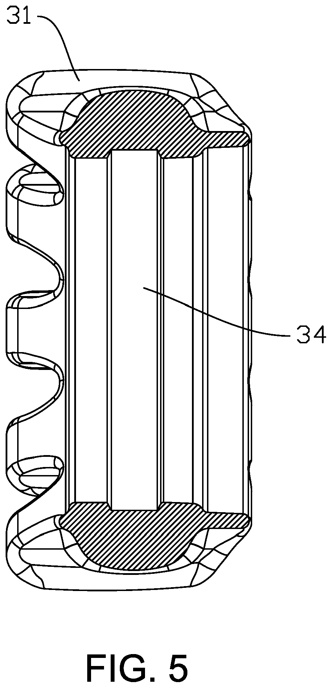

FIG. 5 is a sectional view of the shock absorption and noise reduction ring of the invention.

### DESCRIPTION OF THE EMBODIMENTS

The invention will be described in further detail below in conjunction with the accompanying drawings and embodiments.

Embodiment 1. As shown in the figures, a tire for electric skateboards comprises a hub 1 and a tire casing 2. The hub 1 is sleeved with the tire casing 2, the tire casing 2 is fixedly connected to the hub 1, an annular cavity 21 is formed in the tire casing 2 in a circumferential direction of the tire casing 2, and a deformable shock absorption and noise reduction ring 3 is fixedly disposed in the annular cavity 21.

Embodiment 2. This embodiment is identical with Embodiment 1 except that the shock absorption and noise reduction ring 3 comprises an annular ring 31 and multiple protruding ribs 32 disposed on an outer wall of the annular ring 31. The multiple protruding ribs 32 are distributed at equal intervals in a circumferential direction of the annular ring 31. The thickness of the annular ring 31 is 2.3 mm, a lengthwise extension direction of each protruding rib 32 is parallel to an axial direction of the annular ring 31, and the height of each protruding rib 32 is 16.0 mm. A left end surface of each protruding rib 32 is a slope 33 extending downwards from right to left, a right end surface of each protruding rib 32 is a slope 33 extending downwards from left to right, and the annular ring 31 and the multiple protruding ribs 32 are formed integrally.

Embodiment 3. This embodiment is identical with Embodiment 1 except that the shock absorption and noise reduction ring 3 comprises an annular ring 31 and multiple protruding ribs 32 disposed on an outer wall of the annular ring 31. The multiple protruding ribs 32 are distributed at equal intervals in a circumferential direction of the annular ring 31. The thickness of the annular ring 31 is 2.3 mm, a lengthwise extension direction of each protruding rib 32 is parallel to an axial direction of the annular ring 31, and the height of each protruding rib 32 is 17.5 mm. A left end surface of each protruding rib 32 is a slope 33 extending downwards from right to left, a right end surface of each protruding rib 32 is a slope 33 extending downwards from left to right, and the annular ring 31 and the multiple protruding ribs 32 are formed integrally.

Embodiment 4. This embodiment is identical with Embodiment 1 except that the shock absorption and noise reduction ring 3 comprises an annular ring 31 and multiple protruding ribs 32 disposed on an outer wall of the annular ring 31. The multiple protruding ribs 32 are distributed at equal intervals in a circumferential direction of the annular ring 31. The thickness of the annular ring 31 is 10.8 mm, a lengthwise extension direction of each protruding rib 32 is parallel to an axial direction of the annular ring 31, and the height of each protruding rib 32 is 16.0 mm. A left end surface of each protruding rib 32 is a slope 33 extending downwards from right to left, a right end surface of each protruding rib 32 is a slope 33 extending downwards from left to right, and the annular ring 31 and the multiple protruding ribs 32 are formed integrally.

Embodiment 5. This embodiment is identical with Embodiment 1 except that the shock absorption and noise reduction ring 3 comprises an annular ring 31 and multiple protruding ribs 32 disposed on an outer wall of the annular ring 31. The multiple protruding ribs 32 are distributed at equal intervals in a circumferential direction of the annular ring 31. The thickness of the annular ring 31 is 10.8 mm, a lengthwise extension direction of each protruding rib 32 is parallel to an axial direction of the annular ring 31, and the height of each protruding rib 32 is 17.5 mm. A left end surface of each protruding rib 32 is a slope 33 extending downwards from right to left, a right end surface of each protruding rib 32 is a slope 33 extending downwards from left to right, and the annular ring 31 and the multiple protruding ribs 32 are formed integrally.

Embodiment 6. This embodiment is identical with Embodiment 1 except that the density of the shock absorption and noise reduction ring 3 is 0.9g/cm³.

Embodiment 7. This embodiment is identical with Embodiment 1 except that the density of the shock absorption and noise reduction ring 3 is 1g/cm³.

Embodiment 8. This embodiment is identical with Embodiment 1 except that the hub 1 comprises an inner ring 11 and an outer ring 12 coaxially disposed outside the inner ring 11. The outer ring 12 is fixedly connected to the inner ring 11, an annular groove 34 is formed in an inner wall of the shock absorption and noise reduction ring 3, and the outer ring 12 is fixedly embedded in the annular groove 34.

Embodiment 9. This embodiment is identical with Embodiment 8 except that the thickness of the outer ring 12 is greater than the depth of the annular groove 34. The distance from an inner wall of the shock absorption and noise reduction ring 3 to an outer wall of the inner ring 11 is 5.8 mm. The outer ring 12 is formed with multiple through holes 121 axially penetrating through the outer ring 12, and the multiple through holes 121 are distributed at intervals in a circumferential direction of the outer ring 12. Each through hole 121 is communicated with the annular cavity 21 and is filled with polyurethane plastic 4, and the polyurethane plastic 4 enters the annular cavity 21 to connect the hub 1, the tire casing 2 and the shock absorption and noise reduction ring 3 together.

Embodiment 10. This embodiment is identical with Embodiment 8 except that the thickness of the outer ring 12 is greater than the depth of the annular groove 34, and the distance between an inner wall of the shock absorption and noise reduction ring 3 and an outer wall of the inner ring 11 is 7.8 mm. The outer ring 12 is formed with multiple through holes 121 axially penetrating through the outer ring 12, and the multiple through holes 121 are distributed at intervals in a circumferential direction of the outer ring 12. Each through hole 121 is communicated with the annular cavity 21 and is filled with polyurethane plastic 4, and the polyurethane plastic 4 enters the annular cavity 21 to connect the hub 1, the tire casing 2 and the shock absorption and noise reduction ring 3 together.

The machining process of the invention is as follows.

The hub 1 is mounted on a mold for fixing at first, the shock absorption and noise reduction ring 3 is disposed around the hub 1, such that the outer ring 12 is fixedly embedded in the annular groove 34. Then, a mold of the tire casing 2 is disposed around the hub 1, and liquid polyurethane plastic 4 is injected into the mold of the tire casing 2 to fill in the space of the tire casing 2, the annular cavity 21 and all the through holes 121. After the polyurethane plastic 4 is condensed and solidified, the tire casing 2 is formed by external polyurethane plastic 4, and the hub 1 and the shock absorption and noise reduction 3 are fixedly connected by internal polyurethane plastic 4.

## Claims

1. A tire for electric skateboards, the tire comprising a hub and a tire casing, wherein the hub is sleeved with the tire casing, the tire casing is fixedly connected to the hub, **characterized in that** an annular cavity is formed in the tire casing in a circumferential direction of the tire casing, and a deformable shock absorption and noise reduction ring is fixedly disposed in the annular cavity.

2. The tire for electric skateboards according to claim 1, **characterized in that** the shock absorption and noise reduction ring comprises an annular ring and multiple protruding ribs disposed on an outer wall of the annular ring and distributed at equal intervals in a circumferential direction of the annular ring, and a lengthwise extension direction of each of the protruding ribs is parallel to an axial direction of the annular ring.

3. The tire for electric skateboards according to claim 2, **characterized in that** the annular ring has a thickness of 2.3-10.8 mm, and each of the protruding ribs has a height of 16.0-17.5 mm.

4. The tire for electric skateboards according to claim 2, **characterized in that** a left end surface of each of the protruding ribs is a slope inclining downwards from right to left, and a right end surface of each of the protruding ribs is a slope extending downwards from left to right.

5. The tire for electric skateboards according to claim 2, **characterized in that** the annular ring and the multiple protruding ribs are formed integrally.

6. The tire for electric skateboards according to claim 1, **characterized in that** a density of the shock absorption and noise reduction ring is 0.9-1g/cm³.

7. The tire for electric skateboards according to any one of claims 1-6, **characterized in that** the hub comprises an inner ring and an outer ring coaxially disposed outside the inner ring and fixedly connected to the inner ring, an annular groove is formed in an inner wall of the shock absorption and noise reduction ring, and the outer ring is fixedly embedded in the annular groove.

8. The tire for electric skateboards according to claim 7, **characterized in that** a thickness of the outer ring is greater than a depth of the annular groove, the outer ring is formed with multiple through holes axially penetrating through the outer ring, the multiple through holes are distributed at intervals in a circumferential direction of the outer ring, each of the through holes is communicated with the annular cavity and is filled with the polyurethane plastic, and the polyurethane plastic enters the annular cavity to connect the hub, the tire casing and the shock absorption and noise reduction ring together.

9. The tire for electric skateboards according to claim 8, **characterized in that** a distance from the inner wall of the shock absorption and noise reduction ring to an outer wall of the inner ring is 5.8-7.8 mm.
